# EUROPEAN PATENT APPLICATION

(11) **EP 4 091 765 A1**
(43) Date of publication of application: **23.11.2022**
(21) Application number: 21741242.8
(22) Date of filing: 13.01.2021
(51) Int. Cl.: B23Q 11/08, G06T 7/55, B23Q 17/09, B23Q 17/22, B23Q 17/24

(54) **IMAGE PROCESSING DEVICE, MACHINE TOOL, AND IMAGE PROCESSING METHOD**

(30) Priority: 15.01.2020 JP 2020004356
(71) Applicant: DMG Mori Co., Ltd., Yamatokoriyama-shi, Nara 639-1160 (JP)
(72) Inventor: KANTO, Kenta, Yamatokoriyama-shi, Nara 639-1160 (JP); KODAKA, Keiichi, Yamatokoriyama-shi, Nara 639-1160 (JP); TAKAYAMA, Masakazu, Yamatokoriyama-shi, Nara 639-1160 (JP); KUBOTA, Junichi, Yamatokoriyama-shi, Nara 639-1160 (JP)
(74) Representative: Dantz, Jan Henning
(86) International application number: PCT/JP2021/000889
(87) International publication number: WO 2021/145347

(57) **Abstract**

An image processing device (10) includes: a reception unit (101) configured to receive a plurality of pieces of image data of a tool imaged by an imaging unit attached inside a machine tool that machines a workpiece by using the tool; a point cloud data generating unit (102) configured to generate, from the plurality of pieces of image data received by the reception unit, point cloud data that is profile information relating to a profile of the tool; and a profile image forming unit (103) configured to generate, from the point cloud data, profile image data indicating a two- or three-dimensional profile of the tool.

## Description

### [Technical Field]

The present invention relates to an image processing device, a machine tool, and an image processing method.

### [Background Art]

When a workpiece is machined using a machine tool, it is possible to continue accurate machining of the workpiece by grasping of the shape and the state of a tool. Specifically, machining with a machine tool requires interference checking for a tool and the like, and it is therefore necessary to grasp an accurate shape of the tool. Also, machining with high accuracy can be realized by grasping the state of the tool. However, in practice, it requires a special operation and time to grasp the shape and the state of a tool.

PTL 1 discloses a technique by which the timing of replacement of an ultrasonic joining tool is determined using images. PTL 2 discloses a technique by which a tool of a grinding apparatus is managed using images. PTL 3 discloses a technique for capturing a distal end of a tool of a machine tool in an imaging field of view according to a change in the tool. Furthermore, PTL 4 discloses a technique by which a tool attached to a machine tool is examined using images.

### [Citation List]

### [Patent Literatures]

PTL 1: Japanese Laid-Open Patent Publication No. 2010-207837
PTL 2: Japanese Laid-Open Patent Publication No. 2001-269844
PTL 3: Japanese Laid-Open Patent Publication No. H9-323240
PTL 4: Japanese Laid-Open Patent Publication No. 2016-218550

### [Summary of Invention]

### [Technical Problem]

However, even with any of the techniques disclosed in the patent literatures listed above, it is difficult to accurately grasp the shape and the state of a tool.

### [Solution to Problem]

An image processing device according to the present disclosure includes: a reception unit configured to receive a plurality of pieces of image data of a tool imaged by an imaging unit attached to a machine tool that machines a workpiece by using the tool; a point cloud data generating unit configured to generate, from the plurality of pieces of image data received by the reception unit, point cloud data that is profile information relating to a profile of the tool; and a profile image forming unit configured to generate, from the point cloud data, profile image data indicating a two- or three-dimensional profile of the tool.

The present disclosure also provides a machine tool, an image processing method, and the like, in addition to the image processing device.

These general and specific aspects may be realized by systems, methods, and computer programs, and combinations thereof.

### [Advantageous Effects of Invention]

According to the present invention, it is possible to accurately grasp the shape and the state of a tool. Since the shape and the state of a tool can be accurately grasped, it is possible to reduce the operation burden on a machine tool. In addition, it is possible to improve the machining accuracy.

### [Brief Description of Drawings]

[FIG. 1] FIG. 1 is an external view of a machine tool.
[FIG. 2] FIG. 2 is a diagram illustrating a positional relationship between a tool, an imaging unit, and an illumination unit in the machine tool according to Embodiment 1.
[FIG. 3] FIG. 3 is a block diagram showing a configuration of an image processing device according to Embodiment 1.
[FIG. 4A] FIG. 4A is an example of image data imaged in the machine tool.
[FIG. 4B] FIG. 4B is an example of point cloud data generated by the image processing device.
[FIG. 4C] FIG. 4C is an example of profile image data generated by the image processing device.
[FIG. 5] FIG. 5 is a flowchart illustrating processing for registering point cloud data according to Embodiment 1.
[FIG. 6] FIG. 6 is a flowchart illustrating processing for updating point cloud data according to Embodiment 2.
[FIG. 7] FIG. 7 is a sequence chart illustrating processing for updating profile information.

### [Description of Embodiments]

Hereinafter, image processing devices, machine tools, and image processing methods according to embodiments will be described with reference to the drawings. In the following, the same components are denoted by the same reference numerals, and the descriptions thereof have been omitted.

A "machine tool" described below uses a tool to perform cutting, griding, or the like on a workpiece such as metal that is to be machined, thus machining the workpiece into a desired shape.

An "image processing device" according to the present embodiment is a device that processes images imaged inside the machine tool. Furthermore, the image processing device is utilized, for example, for managing a tool used for machining a workpiece in the machine tool. Specifically, the image processing device acquires image data of the tool. Then, based on the image data of the tool, the image processing device generates point cloud data and profile image data indicating a two- or three-dimensional outer shape. Alternatively, based on the image data of the tool, the image processing device defines a blade part of the tool and a profile of an outer shape of the tool. Alternatively, based on the image data of the tool, the image processing device defines a boundary between the blade part and a shank part of the tool. Through the use of these pieces of information, the image processing device can be utilized for controlling the tool position during machining and managing the tool.

The "point cloud data" is profile information for specifying a profile such as an outer shape of the tool, and will be described as data of a point cloud formed by a plurality of points extracted from a contour of the image data of the tool. The point cloud data may be associated with, as the profile information of the tool, information relating to various parts of the tool, including, for example, information specifying regions of the blade part and the shank part of the tool, the length of the tool, the outer diameter of the tool, and outer diameter information of the tool corresponding to the position in the longitudinal direction.

The "profile image data" represents a two- or three-dimensional outer shape or contour of the tool. For example, two-dimensional profile image data is a projection drawing representing a contour of the tool. Three-dimensional profile image data is three-dimensional image data representing, for example, an outer shape of the tool.

### [Embodiment 1]

### <Machine tool>

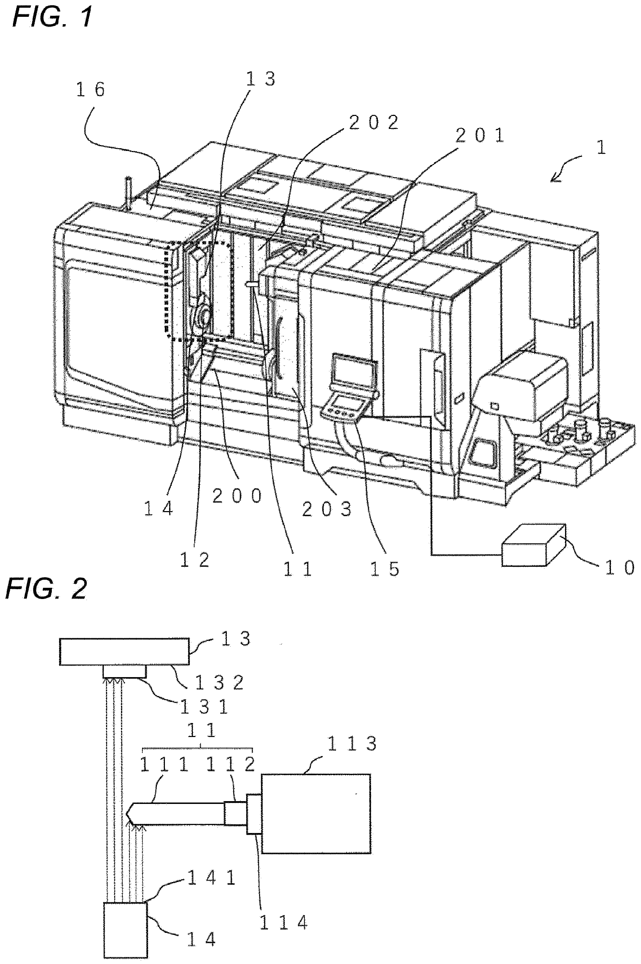

A machine tool 1 has, for example, an outer shape as shown in FIG. 1, and can machine a workpiece disposed inside a machining region 200.

The configuration of the machine tool will be described with reference to FIGS. 1 and 2. The machine tool 1 includes a tool 11 that is attached to a spindle and is used for machining a workpiece, a holding part 12 capable of holding a workpiece to be processed, and capable of holding the workpiece by being driven by a drive mechanism, an imaging unit 13 capable of imaging the tool, and an illumination unit 14 capable of emitting light. In addition, as shown in FIG. 1, the machine tool 1 includes a cover 201 that shuts off the machining region 200 and the outside of the machine tool 1 from each other, and the cover 201 includes a door 203 capable of opening and closing an opening 202 for taking out a workpiece to be machined from the machining region 200 to the outside of the machine tool 1. The machine tool 1 includes a control board 15 for operating the machine tool 1 to perform machining or the like.

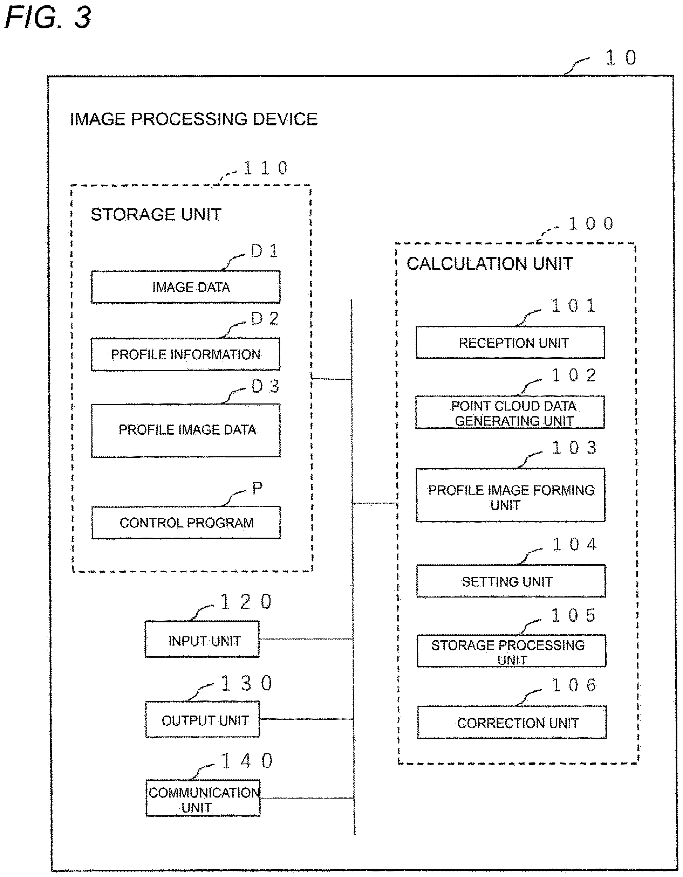

Furthermore, the machine tool 1 is connected to an image processing device 10, which will be described later with reference to FIG. 3. In the present embodiment, the machine tool 1 and the image processing device 10 are separate devices that are connected to each other via a wired cable, or via wireless communication. However, the present invention is not limited to this configuration, and it is also possible to adopt a configuration in which the image processing device 10 is also incorporated inside the machine tool 1.

As shown in FIG. 2, the tool 11 includes a blade part 111 constituting a portion used for machining a workpiece, and a shank part 112 constituting a portion held by a holder 114 of a spindle 113. The machine tool 1 stores a plurality of types of tools 11 in a magazine 16 serving as a storage part shown in FIG. 1. The machine tool 1 can realize a plurality of different types of machining by causing the spindle 113 to hold any tool 11 selected from the plurality of tools 11. Note that the configuration shown in FIG. 2 is located in the portion indicated by the dashed line in FIG. 1.

The spindle 113 is configured to hold a tool 11 used for machining, and to be rotatable and movable by a control mechanism. This enables the machine tool 1 to machine a target workpiece.

The imaging unit 13 is, for example, a camera including an imaging element such as a CCD or a CMOS. The imaging unit 13 can image the tool 11 attached to the tool spindle 113 at a predetermined timing. The imaging unit 13 according to the present embodiment images the tool 11 held by the tool spindle 113 as an imaging target. Note that the imaging unit 13 may image a workpiece held by a workpiece holding part of a workpiece spindle as an imagine target. The imaging unit 13 may be installed in the machining region inside the machine tool 1. The imaging unit 13 may be fixed to an upper portion inside the machine tool 1, for example.

The imaging unit 13 images the tool 11 attached to the tool spindle 113 from a plurality of different directions. Specifically, the spindle 113 rotates the tool 11 held thereon at a predetermined pitch, and the imaging unit 13 images the tool 11 while the rotation of the tool 11 is stopped. At this time, the position or the coordinates of the tool spindle 113 may be fixed. The position of the tool spindle 113 inside the machine tool 1 is determined by coordinates (X axis, Y axis, and Z axis), with the spindle direction defined as the Z-axis direction. When the imaging unit 13 is fixed to an upper portion inside the machine tool 1, the tool 11 is imaged from thereabove. By imaging the tool 11 at predetermined pitch intervals in this manner, it is possible to image the tool 11 from a plurality of different directions even when the imaging unit 13 is fixed. When the tool 11 does not fit in one image, the spindle 113 may move the tool 11 along its rotation axis.

The tool spindle 113 is rotated at predetermined intervals, and the imaging unit 13 images the tool 11 at every predetermined interval, to obtain a plurality of images. That is, an image of the entire tool 11 can be obtained in a divided manner by a plurality of operations of imaging. Accordingly, the imaging unit 13 obtains a plurality of pieces of image data for one tool 11, as viewed in different directions. The imaging unit 13 outputs the obtained image data to the image processing device 10.

The imaging unit 13 may image the tool 11 from a plurality of intersecting directions including a first direction intersecting (preferably orthogonal to) a rotation axis when rotating the tool 11, and a second direction that is different from the first direction. The first direction and the second direction differ from each other by 180 degrees (i.e., the first direction and the second direction are directions opposite to each other). The number of images to be imaged need only be two or more, for example.

As described above, using the imaging unit 13, the machine tool 1 can obtain image data of the tool 11 from a plurality of directions by imaging the tool 11 attached to the tool spindle 113 of the machine tool 1. At this time, it is preferable that the imaging unit 13 acquires images of the tool 11 that are rotated at a predetermined pitch. That is, the imaging unit 13 may image an image each time the tool 11 is rotated about the rotation axis of the spindle 113 by n degree (e.g., 1 ≤n ≤180) relative to the rotation axis. For example, the imaging unit 13 may image 12 images each time the tool 11 is rotated about the rotation axis by 30 degrees, image 20 images each time the tool 11 is rotated about the rotation axis by 18 degrees, or image 180 images each time the tool 11 is rotated about the rotation axis by 2 degrees. In this manner, a plurality of images from different directions perpendicular to the rotation axis of the tool 11 can be obtained for each of the tools 11. In view of the imaging time and the accuracy of the tool profile, it is preferable that 30 (n = 12 degrees per rotation) to 60 (n = 6 degrees per rotation) images are imaged, and these images are processed to generate profile image data. At this time, the machine tool 1 provides information relating to the rotation angle of the tool 11 together with the image data to the image processing device 10. This enables the image processing device 10 to generate point cloud data of stereoscopic information of the tool 11.

For example, the imaging unit 13 images the tool 11 at a timing before a new tool 11 is stored in the magazine 16 serving as the storage part of the machine tool 1. Accordingly, the machine tool 1 can easily generate model data of the tool 11 for interference checking in a simulation performed prior to machining, and it is thus possible to efficiently perform interference checking prior to machining.

As shown in FIG. 2, the illumination unit 14 is configured such that a light emitting surface 141 thereof is disposed so as to oppose a light receiving surface 131 of the imaging unit 13, and, of light emitted from the light emitting surface 141, light that has passed around the tool is incident on the light receiving surface 131. Therefore, the illumination unit 14 is a transmissive illuminator. Through the use of the illumination unit 14, which is a transmissive illuminator, it is possible to obtain a projected image from which the details of the contour of the tool 11 can be grasped. Accordingly, accurate point cloud data of the tool 11 can be obtained in the image processing device 10 that processes the projected image.

Except during imaging of the tool 11, the imaging unit 13 is disposed in an imaging storage part including a shutter for partitioning off the imaging storage part from the machining region. When the tool 11 is imaged, the shutter of the imaging storage part is opened, and the tool 11 attached to the spindle is moved in front of the imaging unit 13 by moving the spindle, and the tool 11 is imaged. Preferably, the imaging unit 13 is calibrated before imaging the tool 11. An object whose distance from the imaging unit 13 is known in advance is imaged, and whether the distance from the imaged image to the object is the same as the set value is checked. If the distance is different, the position of the imaging unit 13 is adjusted. As the object whose distance is known in advance, a back surface of the shutter may be used. Additionally, attachment of a foreign object such as dirt to a lens or glass serving as a light-transmitting member of the imaging unit 13 or a CMOS serving as a light-receiving element may be detected. The reason for this is that if the attachment of a foreign object causes the foreign object to enter an imaged image, the foreign object may be determined to be a chip by determination using artificial intelligence (AI). When the imaging unit 13 detects a foreign object, a control unit performs a control to cause the foreign object to fall off from the light-transmitting member and the light-receiving element by applying vibration to the light-receiving element and the light-transmitting member using a vibration mechanism, whereby it is possible to obtain an image with reduced occurrence of the appearance of a foreign object. Accordingly, the presence or absence of a chip can be accurately determined.

The positional relationship between the imaging unit 13 and the tool 11 differs depending on the purpose of imaging. That is, imaging is performed in a state in which the tool 11 is installed at a predetermined position such that a portion of the tool 11 for which profile information is to be generated is within a depth of field when imaging is performed by the imaging unit 13. For example, comparing "contour measurement" and "surface abrasion measurement" of the tool 11, for the contour measurement of the tool 11, a contour portion is positioned at a working distance (WD) of the optical axis. On the other hand, for the surface abrasion measurement of the tool 11, a center portion relative to the diameter of the tool 11 is positioned on the optical axis, and an outer surface of the tool 11 is positioned at a working distance (WD) of the optical axis. By acquiring an image through such imaging, it is possible to obtain a desired image.

### <Image processing device>

An example of the image processing device 10 according to the embodiment will be described with reference to FIG. 3. The image processing device 10 includes a calculation unit 100, a storage unit 110, an input unit 120, an output unit 130, and a communication unit 140. The image processing device 10 is an information processing device such as a personal computer or a tablet terminal, for example. The image processing device 10 may be included in the machine tool 1, or may be separate from the machine tool 1 and capable of performing wired or wireless communication. The input unit 120 and the display unit 130 may be included in the image processing device 10 that is separate from the machine tool 1, or may be included in a control board of the machine tool 1. Alternatively, the input unit 120 and the display unit 130 may be provided in each of the image processing device 10 and the machine tool 1, and the user can selectively use any of the input units 120 and any of the display units 130.

The calculation unit 100 is a controller responsible for overall control of the image processing device 10. For example, the calculation unit 100 executes the respective processing of a reception unit 101, a point cloud data generating unit 102, a profile image forming unit 103, a setting unit 104, a storage processing unit 105, and a correction unit 106 by reading out and executing a control program P stored in the storage unit 110. The calculation unit 100 is not limited to a calculation unit that realizes a predetermined function by hardware and software working cooperatively with each other, and may be a specifically designed hardware circuit that realizes a predetermined function. That is, the calculation unit 100 can be implemented by any of various processors such as a CPU, an MPU, a GPU, an FPGA, a DSP, and an ASIC.

The storage unit 110 is a recording medium that records various types of information. The storage unit 110 may be implemented, for example, by a RAM, a ROM, a flash memory, an SSD (Solid State Device), a hard disk, or another storage device, or an appropriate combination thereof. In addition to the control program P executed by the calculation unit 100, various types of data or the like used in the machine tool 1 are stored in the storage unit 110. For example, the storage unit 110 stores image data D1, profile information D2, and profile image data D3.

The input unit 120 is input means such as a keyboard, a mouse, and a touch panel used for imputing data and operation signals. The output unit 130 is output means such as a display used for outputting data.

The communication unit 140 is an interface circuit (module) for enabling data communication with an external device (not shown). For example, the communication unit 140 can perform data communication with the imaging unit 13 that images image data.

The reception unit 101 receives a plurality of pieces of image data D1 of the tool 11 imaged by the imaging unit 13 attached inside the machine tool 1 that machines a workpiece by using the tool 11. For example, the reception unit 101 receives the image data D1 of a plurality of projected images of the tool 11 imaged from different angles while the tool 11 is rotated. The reception unit 101 causes the plurality of pieces of received image data D1 to be stored in the storage unit 110 in association with identification information of the tool 11, and identification information for identifying a positional relationship between the tool 11 and the imaging unit 13 during imaging. This makes it possible to generate point cloud data and profile image data D3 relating to the target tool 11 at a later time.

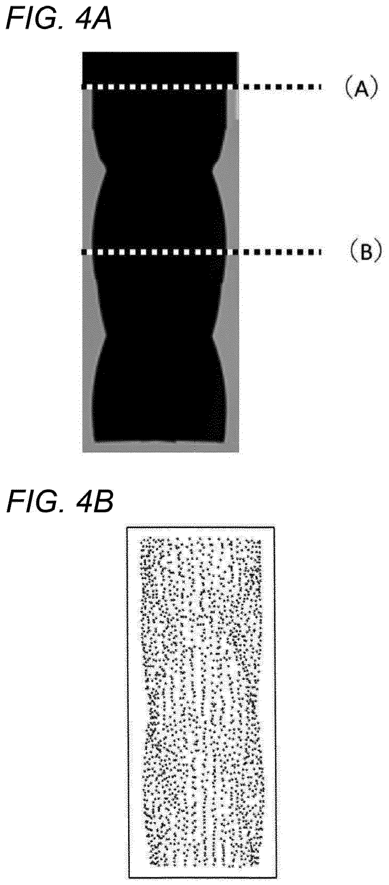

FIG. 4A is an example of the image data D1 received by the reception unit 101. FIG. 4A shows an example of image data D1 including an outer shape of the tool 11 including the blade part 111 and the shank part 112. The image data D1 may be acquired by a single operation of imaging performed by one imaging unit. When the reception unit 101 has received a plurality of pieces of simultaneously imaged image data from a plurality of imaging units 13 that image different imaging ranges, the reception unit 101 may combine the plurality of pieces of simultaneously imaged image data to generate one piece of image data D1. Furthermore, a plurality of operations of imaging may be performed by one imaging unit while moving the tool, and the resulting plurality of pieces of image data may be combined to generate one piece of image data D1.

The image data D1 may be an image including the entire tool 11, or may be an image including only a blade portion located at a distal end portion of the tool. In such a case, a plurality of images may be acquired by automatically tracking the contour of the tool from the distal end thereof, and these images may be combined to acquire image data D1 of the distal end portion of the tool. By doing so, the imaging time can be shortened when it is only necessary to obtain an image of the distal end portion of the tool.

The image data D1 may be displayed on the output unit 130 so as to enable the operator to use the input unit 120 to set a boundary between the blade part of the tool 11 that has been automatically set, and the shank part or the like, which is another portion of the tool 11. For example, as the boundary between the blade part and the shank part, the operator sets (A) shown in FIG. 4A. The image data D1 may be displayed on the output unit 130 so as to enable the operator to set a range for which processing such as analysis is to be performed in the image processing device 10. For example, when the range for analysis is initially set as a portion of the blade part that is located below (A), the operator can change the setting of the range for analysis from (A) to (B). This makes it possible to analyze a portion of the blade part that is located below (B). By analyzing only a portion of the blade part, it is possible to shorten the analysis time. In addition, even when analysis is performed in the same amount of time, it is possible to increase the number of analysis points. This description of the setting has been given for the boundary between the blade part and the shank part, but is also applicable to the setting of a boundary between the tool and a tool holder, for example.

The point cloud data generating unit 102 generates, from a plurality of pieces of image data D1 received by the reception unit 101, point cloud data relating to an outer shape of the tool. The plurality of pieces of image data D1 include images of the tool 11 imaged from two or more, or a plurality of intersecting directions including a first direction intersecting (preferably orthogonal to) the rotation axis of the tool 11, and a second direction that is different from the first direction. Specifically, the point cloud data generating unit 102 generates, as point cloud data, a point cloud formed by a plurality of points extracted from a contour of one tool 1, the point cloud being included in a plurality of pieces of image data D1 obtained for the tool 11. The point cloud data is generated using at least data obtained by processing an image of the tool 11 imaged from the first direction, and data obtained by processing an image of the tool 11 imaged from the second direction. The number of imaged images necessary to generate profile image data does not need to be 2, and may be, for example, 12 to 180, or 30 to 60. For example, the point cloud data generating unit 102 generates point cloud data by extracting points at predetermined intervals from the contour of one tool 11 from pieces of image data D1 obtained for one tool 11, and combining the plurality of extracted points with an angle component. The angle component is received from the machine tool 1, together with the pieces of image data D1. This enables the point cloud data generating unit 102 to generate point cloud data that can represent a three-dimensional stereoscopic structure of the tool 11. In addition, the point cloud data generating unit 102 causes the point cloud data generated from the image data D1 to be stored in the storage unit 110 as profile information D2, together with the identification information of the tool 11, and causes the profile information D2 to be stored in association with the identification information of the tool 11 that is included in tool management information. FIG. 4B is an example of the point cloud data generated by the point cloud data generating unit 102.

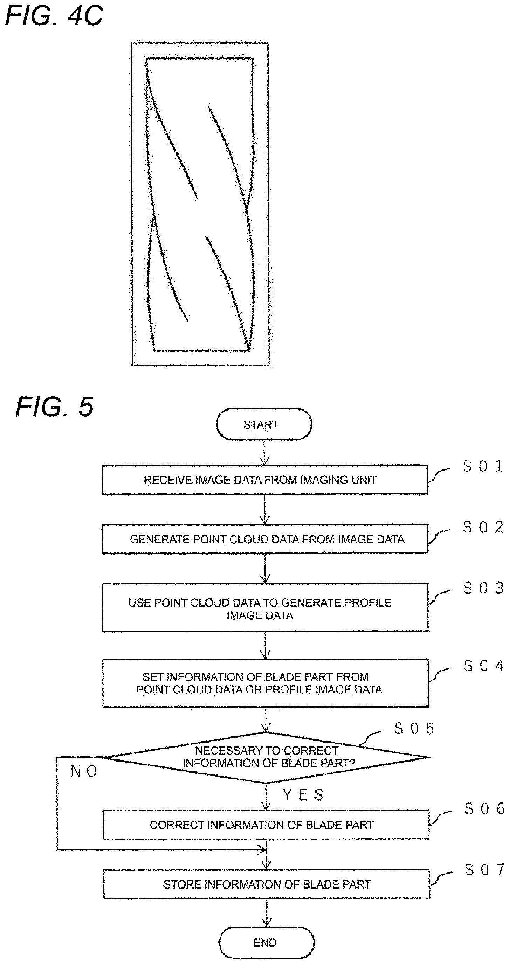

The profile image forming unit 103 generates, from the point cloud data, profile image data D3 indicating a two- or three-dimensional profile of the tool 11. Specifically, the profile image forming unit 103 can generates, as the profile image data D3, a contour of a plane obtained by cutting a portion of a three-dimensional stereoscopic structure formed by the point cloud data. The profile image forming unit 103 may generate, as the profile image data D3, an outer shape of a three-dimensional stereoscopic structure formed by point cloud data of the profile information D2. Furthermore, the profile image data D3 may be, for example, two-dimensional data of the tool in a DXF format for a two-dimensional CAD data format, generated from the profile information D2. The profile image forming unit 103 causes the profile image data D3 generated from the point cloud data to be stored in the storage unit 110, together with the identification information of the tool 11. FIG. 4C is an example of the profile image data D3 that three-dimensionally represents the tool and that has been generated by the profile image forming unit 103.

The setting unit 104 sets information of the blade part 111 of the tool 11. Specifically, using the point cloud data of the profile information D2 or the profile image data D3 stored in the storage unit 110, the setting unit 104 can sets, as the information of the blade part 111, information relating to the region of the blade part 111 and the size of the blade part 111, such as the length and the diameter. Alternatively, the setting unit 104 can set a boundary between the blade part 111 and the shank part 112 of the tool 11 as the information of the blade part 111. In addition to the above, the setting unit 104 may set, as the information of the blade part 111, both the information relating to the region and the size of the blade part 111, and the boundary between the blade part 111 and the shank part 112.

For example, with reference to data of the shape of each type of the tool 11, the shape of the blade part 111, the shape of the shank part 112, or the like set in advance as a reference, the setting unit 104 can set, from the point cloud data of the profile information D2 or the profile image data D3, the region and the size of the blade part 111 of a target tool 11, or the boundary between the blade part 111 and the shank part 112 thereof.

The storage processing unit 105 adds information of the blade part 111 set by the setting unit 104 to the profile information D2 as information of the tool 11, and causes the information to be stored in the storage unit 110. Specifically, the storage processing unit 105 adds the information of the blade part 111 to the profile information D2 of a target tool 11.

At this time, the correction unit 106 corrects the information of the blade part 111 as needed. Specifically, the point cloud data generated by the point cloud data generating unit 102 or the profile image data D3 generated by the profile image forming unit 103 is displayed on a display serving as the output unit 130. For these pieces of displayed data, the operator or the like can input a signal for correcting the information of the blade part 111. For example, the correction unit 106 corrects the information of the blade part 111 that indicates the boundary position between the blade part 111 and the shank part 112 of the tool 11, based on the signal input by the operator or the like via the input unit 120. Alternatively, the correction unit 106 corrects the information of the blade part 111 of the tool 11 based on the signal input by the operator or the like via the input unit 120. Accordingly, in the image processing device 10, the information of the blade part 111 that relates to the tool 11 used in the machine tool 1 is registered in the profile information D2.

### <Processing for registering profile information>

Processing for registering the profile information D2 performed in the image processing device 10 according to Embodiment 1 will be described with reference to the flowchart shown in FIG. 5. The processing for registering the profile information D2 is started at a timing when a new tool 11 is installed on the spindle 113 and becomes usable in the machine tool 1. The reason for this is that images are imaged while the tool 11 is attached to the spindle 113, and thus the position of the tool 11 can be accurately and easily controlled. First, the reception unit 101 receives image data D1 obtained by imaging the tool 11 attached to the spindle 113 by the imaging unit 13, and causes the image data D1 to be stored in the storage unit 110 (S01).

The point cloud data generating unit 102 uses the image data D1 of the tool 11 received in step S01 to generate point cloud data formed by a plurality of point clouds extracted from an outer shape of the tool 11 (S02). In addition, the point cloud data generating unit 102 causes the generated point cloud data to be stored in the storage unit 110 as profile information D2.

The profile image forming unit 103 uses the point cloud data of the tool 11 generated in step S02 to generate profile image data D3 (S03). In addition, the profile image forming unit 103 causes the generated profile image data D3 to be stored in the storage unit 110.

The setting unit 104 uses the point cloud data generated in step S02 or the profile image data D3 of the tool 11 generated in step S03 to set information of the blade part 111 of the tool 11 (S04). In the case of using the point cloud data to set the information of the blade part 111, the generation of the profile image data D3 in step S03 may be omitted.

When it is necessary to correct the information of the blade part 111 set in step S04 (YES in S05), the correction unit 106 corrects the profile information D2 (S06). Specifically, if a signal is input by the operator via the input unit 120, the correction unit 106 corrects the profile information D2 according to the input signal.

The storage processing unit 105 additionally registers the information of the blade part 111 set in step S04 or the information of the blade part 111 corrected in S06 in the profile information D2 stored in the storage unit 110 (S07).

Thus, with the image processing device 10 according to the embodiment, the profile image data D3 and the profile information D2 can be generated easily and in a short time when a new tool 11 is to be used in the machine tool 1. This enables the machine tool 1 to perform interference checking using the profile image data D3 and the profile information D2, thus making it possible to easily machine a workpiece with high accuracy.

### [Embodiment 2]

### <Machine tool and image processing device>

In the machine tool 1 and the image processing device 10 according to Embodiment 1, images are acquired at a timing at which a new tool 11 becomes usable, for example, as a result of the new tool 11 having been stored in the machine tool 1, and then the profile information D2 is registered. In contrast, in a machine tool and an image processing device according to Embodiment 2, images are newly acquired at a predetermined timing at which wear, damage, or the like due to use has occurred in a tool 11 for which profile information D2 has already been registered, and then the profile information D2 is updated.

The machine tool according to Embodiment 2 has the same configuration as that of the machine tool 1 described above with reference to FIGS. 1 and 2, and the image processing device according to Embodiment 2 has the same configuration as that of the image processing device 10 described above with reference to FIG. 3. Therefore, the machine tool and the image processing device will be described with reference to FIGS. 1 to 3.

The imaging unit 13 of the machine tool 1 according to Embodiment 2 images a tool at predetermined intervals, while the same tool is attached to a spindle of the machine tool 1. Accordingly, it is possible to compare pieces of image data imaged at a plurality of different timings in the image processing device 10, and identify a change in the tool 11, such as wear. For example, the imaging unit 13 may periodically image the tool 11 at a timing at which the number of uses of each tool 11 has reached a predetermined number. Alternatively, the imaging unit 13 may image the tool 11 if a value detected in the machine tool 1 by a sensor of some kind falls outside a predetermined range.

Here, it is preferable that, at each imaging timing, the position and the orientation of the imaging unit 13 are fixed. In this case, fine focus adjustment or the like can be performed during imaging by controlling the movement of the spindle 113 to which the tool 11 is attached. By fixing the imaging unit 13 and utilizing a movement mechanism of the spindle 113 in this manner, it is possible to eliminate the need for a movement mechanism or the like, and prevent an increase in size of the machine tool 1.

The correction unit 106 of the image processing device 10 according to Embodiment 2 corrects the profile information D2 defined based on the image data D1 of the tool 11 obtained in previous imaging performed by the imaging unit 13 by using the point cloud data generated based on new image data D1 of the tool 11 obtained in later imaging. For example, the output unit 130 outputs, to the output unit 130, previous profile information D2 stored in the storage unit 110, and outputs the profile information D2 generated from newly obtained image data D1 side-by-side therewith. Accordingly, the operator or the like can more easily grasp a change in the tool 11. The operator or the like can compare these pieces of displayed data, and input a signal for correcting the information of the blade part that constitutes a portion of the profile information D2. Alternatively, it is possible to adopt a configuration in which a signal for correcting the wear of the tool can be input via a tool management screen. Based on the signal newly input by the operator or the like via the input unit 120, the correction unit 106 corrects the information of the blade part included the profile information D2 or the tool management information managed via the tool management screen. In addition, the storage processing unit 105 registers the new profile information D2 corrected by the correction unit 106 in the storage unit 110. Accordingly, the state of the tool 11 is updated to the most recent state based on the profile information D2. If it is detected from the updated new profile information D2 that the tool 11 has worn away sufficiently to require replacement, a notification indicating the arrival of timing of replacing the tool may be displayed on the output unit 130 in the image processing device 10.

### <Processing for updating profile information>

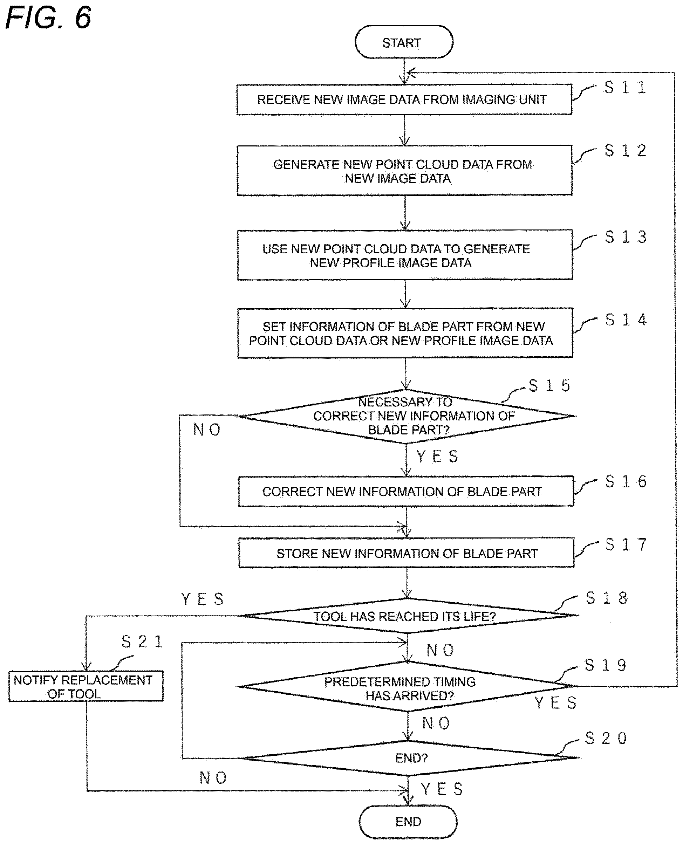

Processing for updating the profile information D2 performed in the image processing device 10 according to Embodiment 1 will be described with reference to the flowchart shown in FIG. 6. First, the reception unit 101 receives new image data D1 imaged by the imaging unit 13, and causes the new image data D1 to be stored in the storage unit 110 (S11).

The point cloud data generating unit 102 uses the new image data D1 of the tool 11 received in step S11 to generate new point cloud data (S12). In addition, the point cloud data generating unit 102 causes the newly generated point cloud data to be stored in the storage unit 110 as new profile information D2.

The profile image forming unit 103 uses the new point cloud data of the tool 11 generated in step S12 to generate new profile image data D3 (S13). In addition, the profile image forming unit 103 causes the generated new profile image data D3 to be stored in the storage unit 110.

The setting unit 104 uses the new point cloud data generated in step S12 or the new profile image data D3 of the tool 11 generated in step S13 to set information of the blade part of the current tool 11 (S14). In the case of using the point cloud data to set the information of the blade part 111, the generation of new profile image data D3 in step S13 may be omitted.

When it is necessary to correct the information of the blade part set in step S14 (YES in S15), the correction unit 106 corrects the profile information D2 (S16). Specifically, if a signal is input by the operator via the input unit 120 for the profile information D2 or the like displayed for comparison on the output unit 130, the correction unit 106 corrects the profile information D2 according to the input signal.

The storage processing unit 105 causes the new information of the blade part 111 set in step S14 or the new information of the blade part 111 corrected in step S16 to be stored in the storage unit 110 (S17). Accordingly, new profile information D2 obtained for the state of the current tool 11 is registered in the image processing device 10.

If the current tool 11 in the state specified by the registered new profile information D2 has not reached a preset life of the tool 11 (NO in S18), and if a predetermined timing of acquiring new image data has arrived (YES in S19), the image processing device 10 repeats the processing operations of steps S11 to S19. For example, in the image processing device 10, data for determining whether or not the tool 11 has reached the life is stored in the storage unit 110.

On the other hand, if a timing of ending the processing in the machine tool 1 has arrived (YES in S20), the processing for updating the profile information D2 is ended.

If the current tool 11 in the state specified by the registered new profile information D2 has reached the preset life of the tool 11 (YES in S18), the image processing device 10 displays a notification indicating the arrival of the timing of replacing the tool on the output unit 130 (S21), and ends the processing for updating the profile information D2.

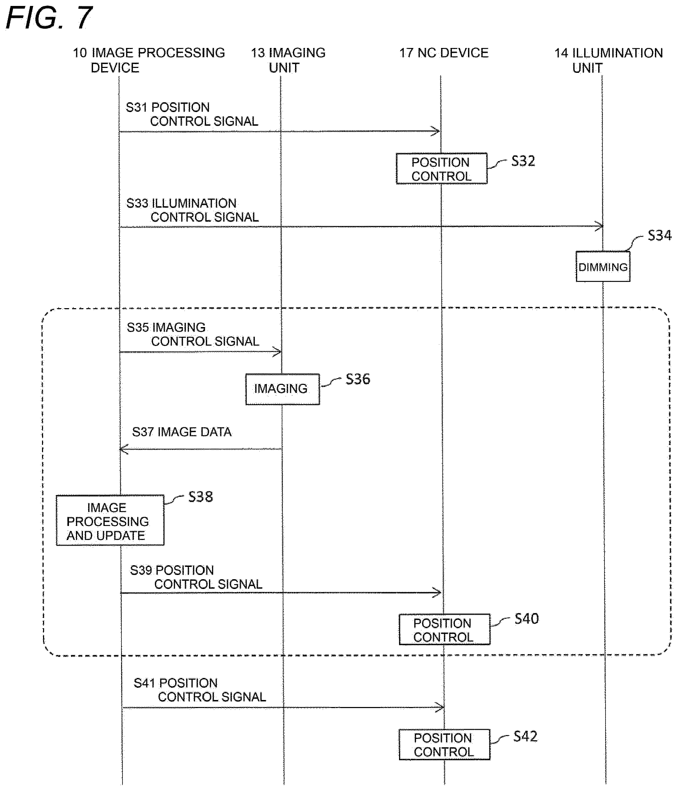

Here, processing performed in the machine tool 1 when performing the processing for updating the profile information D2 described with reference to FIG. 6 will be described with reference to the sequence chart shown in FIG. 7. First, the image processing device 10 transmits, to an NC device 17, a position control signal for adjusting the position of the tool 11 (S31). Thus, the NC device 17 controls the spindle 113 to adjust the position of the tool 11 (S32).

The image processing device 10 transmits, to the illumination unit 14, an illumination control signal S33 for dimming illumination (S33). Thus, the illumination unit 14 is dimmed (S34).

Subsequently, the image processing device 10 transmits an imaging control signal to the imaging unit 13 (S35). Thus, the imaging unit 13 images image data D1 of the tool 11 (S36). In addition, the imaging unit 13 outputs the imaged image data D1 to the image processing device 10.

The image processing device 10 uses the acquired image data D1 to perform image processing and data update as described above with reference to FIG. 6 (S38).

In the case of continuing the processing, the image processing device 10 transmits a new position control signal to the NC device 17 (S39). The NC device 17 controls the spindle 113 to adjust the position of the tool 11 (S40). The processing operations of steps S35 to S40 enclosed by the dashed line in FIG. 7 are repeated until the processing for updating the profile information D2 ends.

Alternatively, if the timing of replacing the tool 11 has arrived, the image processing device 10 transmits, to the NC device 17, a position control signal for controlling the position of the tool 11 to a position for replacement (S41). Thus, the NC device 17 controls the spindle 113 to adjust the position of the tool 11 to the position for replacement (S42). Subsequently, the tool 11 is replaced in the machine tool 1.

In this manner, new profile information D2 including a change that has occurred in the tool, such as wear or damage, can be registered in the image processing device 10. Accordingly, the machine tool 1 can use the new profile information D2 to appropriately reflect degradation such as wear and damage or positional displacement of the tool 11 due to long-term use, thus preventing a reduction in the machining accuracy.

### [Modification 1]

For the machine tool 1 described above in Embodiment 1, the imaging unit 13 is described as imaging a transmission image of the tool 11. In contrast, the imaging unit 13 may image reflected light. Specifically, the illumination unit 14 may be configured that a light emitting surface thereof is disposed in the same orientation as a light receiving surface of the imaging unit 13, light emitted from the light emitting surface impinges on the tool, and reflected light thereof is incident on the light receiving surface of the imaging unit 13. Thus, the imaging unit 13 can obtain an image of the surface of the tool 11, and it is therefore possible to appropriately grasp a flaw or the like formed in the tool 11.

### [Modification 2]

In the image processing device 10 and the machine tool 1 described above, image data D1 that is acquired is used to register and update the profile information D2. In contrast, in the image processing device 10, image data D1 that is acquired may be used to identify a tool that is currently held by the holding part 12 of the machine tool 1. In this case, the image processing device 10 stores, in the storage unit 110, tool list data that is information of a plurality of tools that can be used in the machine tool 1, and includes, in the calculation unit 100, an identification unit that identifies the tools.

The tool list data includes, for example, a model number of each tool as the identification information of the tool. In addition, the tool list data includes, in each of the model numbers, at least an outer diameter and a length of the blade part of the tool as the information relating to the shape of the tool. Furthermore, for a tool whose outer diameter differs for each portion of the blade part 111 of the tool, information relating to the longitudinal direction of a portion of the tool for identifying that portion may be included as the information relating to the shape of the tool. The identification unit uses the point cloud data or the profile image data D3 to determine, from the tool list data, the model number of the tool attached to the spindle 113. This makes it possible to easily identify the tool held on the spindle 113.

### [Modification 3]

In the image processing device 10 described above, the setting unit 104 sets the information of the blade part 111 of the tool 11. In contrast, the profile image forming unit 103 may use a learning model trained in advance through machine learning to set the information of the blade part 111. Specifically, parameters obtained by learning with training data including a set of profile image data of a tool, a boundary position between the blade part 111 and the shank part 112 based on actual measurement of the tool 11, and outer shape profile data based on actual measurement of the tool 11 are applied to the learning model. The learning model receives image data of the tool 11 as input, and outputs the profile information D2 such as the boundary position between the blade part 111 and the shank part 112 of the tool 11, and the profile image data D3. This makes it possible to use the learning model to register the profile information D2.

In the foregoing, the embodiments have been described as examples of the technique disclosed in the present application. However, the technique according to the present disclosure is not limited thereto, and is also applicable to embodiments to which alteration, replacement, addition, omission, and so forth have been made as appropriate.

With the use of the technique disclosed in the present specification, it is possible to automatically generate a 3D model of a tool for interference checking. With the use of the technique disclosed in the present specification, it is also possible to detect any chip caught in a tool when replacing the tool. Use of the technique disclosed in the present specification makes it possible to automate correction of the tool. With the use of the technique disclosed in the present specification, it is also possible to quantitatively manage a tool by detecting chipping of a rake surface or measuring the amount of wear of a flank surface.

The image processing device, the machine tool, and the image processing method according to all claims of the present disclosure are each realized by cooperation with hardware resources, for example, a processor, a memory, and a program.

### [Industrial Applicability]

The image processing device, the machine tool, and the image processing method according to the present disclosure are each useful for facilitating interference checking of a machine tool, for example.

### [Reference Signs List]

- 1: Machine tool
- 11: Tool
- 12: Holding part
- 13: Imaging unit
- 14: Illumination unit
- 10: Image processing device
- 100: Calculation unit
- 101: Reception unit
- 102: Point cloud data generating unit
- 103: Profile image forming unit
- 104: Setting unit
- 105: Storage processing unit
- 106: Correction unit
- 110: Storage unit
- 120: Input unit
- 130: Output unit
- 140: Communication unit
- D1: Image data
- D2: Profile information
- D3: Profile image data
- P: Control program

## Claims

1. An image processing device comprising:
a reception unit configured to receive a plurality of pieces of image data obtained by imaging an appearance of a tool from a plurality of directions by an imaging unit attached to a machine tool that machines a workpiece by using the tool; and
a point cloud data generating unit configured to generate, from the plurality of pieces of image data received by the reception unit, one piece of point cloud data of the tool, the point cloud data being profile information relating to a profile of the tool.

2. The image processing device according to claim 1, further comprising
a profile image forming unit configured to generate, from the point cloud data, profile image data indicating a two- or three-dimensional profile of the tool.

3. An image processing device comprising:
a reception unit configured to receive an image of a tool imaged by an imaging unit attached to a machine tool that machines a workpiece by using the tool; and
a setting unit configured to, based on the image of the tool, set profile information defining a boundary between a blade part and another part of the tool.

4. An image processing device comprising:
a holding part configured to hold a tool;
an imaging unit for imaging the tool; and
a storage part configured to store the imaging unit and including a shutter that exposes the imaging unit by being opened and closed,
wherein the imaging unit is configured to, before imaging the tool, calibrate the imaging unit by using the shutter, or detect attachment of a foreign object on a light-transmitting member and/or a light-receiving element of the imaging unit.

5. The image processing device according to claim 3, further comprising
a correction unit configured to, based on a signal input from an input unit, correct the boundary between the blade part and the other part of the tool, the boundary being included in the profile information of the tool.

6. The image processing device according to claim 1, further comprising
a correction unit configured to correct the profile information of the tool,
wherein the reception unit is configured to, while the same tool is attached to a spindle of the machine tool, receive images obtained by imaging the tool at predetermined timings, and
the correction unit is configured to correct the profile information defined based on an image of the tool obtained by previous imaging by using the profile information defined based on an image of the tool obtained in later imaging.

7. The image processing device according to any one of claims 1 to 6, further comprising either
a transmissive illumination unit configured such that a light emitting surface thereof is disposed so as to oppose a light receiving surface of the imaging unit, and, of light emitted from the light emitting surface, light that has passed around the tool is incident on the light receiving surface, or
a reflective illumination unit configured such that a light emitting surface thereof is disposed in the same orientation as a light receiving surface of the imaging unit, light emitted from the light emitting surface impinges on the tool, and reflected light thereof is incident on the light receiving surface.

8. A machine tool configured to be connected to the image processing device according to any one of claims 1 to 7, comprising:
a holding part for holding a workpiece to be machined; and
a door for opening and closing an opening for taking out the workpiece from a machining region in which the workpiece is machined, to the outside of the machine tool.

9. A machine tool comprising:
the image processing device according to any one of claims 1 to 7;
a holding part for holding a workpiece to be machined; and
a door for opening and closing an opening for taking out the workpiece from a machining region in which the workpiece is machined, to the outside of the machine tool.

10. An image processing method comprising the step of
generating, from a plurality of images obtained by imaging an appearance of a tool from a plurality of directions by an imaging unit attached inside a machine tool that machines a workpiece by using the tool, one piece of point cloud data of the tool as profile information, the point cloud data being formed by a plurality of points extracted from a contour of the tool.
